# EUROPÄISCHE PATENTSCHRIFT

(11) **EP 1 423 294 B1**
(45) Veröffentlichungstag und Bekanntmachung des Hinweises auf die Patenterteilung: **16.05.2007**
(21) Anmeldenummer: 02772212.3
(22) Anmeldetag: 27.08.2002
(51) Int. Cl.: B60N 2/225

(54) **BESCHLAG FÜR EINEN FAHRZEUGSITZ**
FITTING FOR A VEHICLE SEAT
FERRURE DESTINEE A UN SIEGE DE VEHICULE

(30) Priorität: 06.09.2001 DE 10144840; 26.01.2002 DE 10203006
(43) Veröffentlichungstag der Anmeldung: 02.06.2004
(73) Patentinhaber: KEIPER GmbH & Co. KG, 67657 Kaiserslautern (DE)
(72) Erfinder: FINNER, Holger, 42499 Hückeswagen (DE); VEDDER, Andreas, 42781 Haan (DE); SCHOLZ, Grit, 42855 Remscheid (DE); BUSCH, Heinrich, 42855 Remscheid (DE); LEHMANN, Ulrich, 53347 Alfter-Bonn (DE)
(74) Vertreter: Patentanwälte Hosenthien-Held und Dr. Held
(86) Internationale Anmeldenummer: PCT/EP2002/009534
(87) Internationale Veröffentlichungsnummer: WO 2003/024740

(56) Entgegenhaltungen:
- DE-A- 3 941 215
- DE-A- 4 007 023
- DE-A- 19 527 374
- DE-A- 19 716 813
- DE-A- 19 938 666
- FR-A- 2 656 392
- FR-A- 2 806 980
- GB-A- 2 107 386
- US-A- 4 439 053
- US-A- 4 582 360
- US-A- 5 634 689

## Beschreibung

Die Erfindung betrifft einen Beschlag für einen Fahrzeugsitz mit den Merkmalen des Oberbegriffs des Anspruches 1.

Ein Solcher Beschlag mit einem Exzenterumlaufgetriebe, welches einen einteiligen Mitnehmer aufweist, ist aus der DE 39 41 215 A1 bekannt. Der Mitnehmer definiert teilweise den Exzenter und sitzt mittels einer Verzahnung drehfest auf einer Antriebswelle, welche auch der Lagerung der ersten Beschlagteils dient, während das zweite Beschlagteil den Exzenter aufnimmt. Aus der DE 199 38 666 A1 ist ein Beschlag der eingangs genannten Art bekannt, bei dem der für den Antrieb notwendige Mitnehmer zweiteilig als Mitnehmerbuchse und als Mitnehmerring ausgebildet ist, um einen funktionsbedingten Totgang bei Richtungsumkehr zu verringern. Mitnehmerbuchse und Mitnehmerring sind über zwei Nasen bzw. eine Aussparung drehfest miteinander verbunden. Bei einer motorischen Einstellung des Beschlags besteht aber das Problem, dass - insbesondere beim Anfahren des Endanschlags - unerwünschte, hohe Belastungen im Beschlag auftreten.

Der Erfindung liegt die Aufgabe zu Grunde, einen Beschlag der eingangs genannten Art zu verbessern, insbesondere die Spitzenbelastungen zu reduzieren. Diese Aufgabe wird erfindungsgemäß durch einen Beschlag mit den Merkmalen des Anspruches 1 gelöst. Vorteilhafte Ausgestaltungen sind Gegenstand der Unteransprüche.

Dadurch, dass die Mitnehmerbuchse und der Mitnehmerring formschlüssig durch ein Übertragungsprofil miteinander verbunden sind, können höhere Lasten über diese Verbindung übertragen werden. Dies verbessert die Einsatzmöglichkeit des Beschlags als motorisch einstellbarer Beschlag und reduziert die Spitzenbelastung der einzelnen Bauteile. Der Beschlag ist so ausgelegt, dass er unter Last einen höheren Wirkungsgrad aufweist als ohne Last. Im Falle zweier erfindungsgemäßer Beschläge mit einer gemeinsamen Antriebswelle ist eine zuverlässige Synchronisierung bei der Montage der Antriebswelle möglich. Die Abstufung, welche sich mit größerem Durchmesser an die der Lagerung der Mitnehmerbuchse dienenden Nabe anschließt, nimmt den Mitnehmerring im Bereich des beispielsweise durch Verzahnungen gebildeten Übertragungsprofils auf. Anstelle der Verzahnungen sind auch andere formschlüssige Übertragungsprofile mit Rippen, Polygonzügen oder dergleichen möglich.

Das Übertragungsprofil kann gebildet werden durch eine Außenverzahnung der Mitnehmerbuchse, beispielsweise an der Abstufung derselben, und durch eine bereichsweise vorgesehene Innenverzahnung des Mitnehmerrings, die formschlüssig und vollständig in die Außenverzahnung greift. Zusätzlich kann das formschlüssige Übertragungsprofil von Mitnehmerbuchse und Mitnehmerring einerseits und der Exzenter anderseits in der gleichen Ebene angeordnet sein, so dass durch die Vermeidung mehrachsiger Spannungszustände ein höheres Antriebsmoment übertragen werden kann. Auch hierdurch wird die Einsatzmöglichkeit des Beschlags als motorisch einstellbarer Beschlag verbessert. Aufgrund der verbesserten Lastübertragung mit dem Formschluß zwischen Mitnehmerbuchse und Mitnehmerring ist eine bevorzugte Ausbildung der Mitnehmerbuchse aus Kunststoff möglich, welche komplexere Geometrien ermöglicht und die Herstellungskosten reduziert.

Für einen Toleranzausgleich zwischen Mitnehmerbuchse und Mitnehmerring ist vorzugsweise das Material des Übertragungsprofil der Mitnehmerbuchse bei der Montage verdrängbar. Zur axialen Sicherung des Exzenters sind an der Mitnehmerbuchse vorzugsweise Nocken vorgesehen, welche am Exzenter anliegen.

Hohe Belastungsspitzen treten nicht nur durch die bekannte Übertragung zwischen Mitnehmerbuchse und Mitnehmerring, sondern auch bei einer nicht ganz glkeichmäßigen Abwälzbewegung auf, beispielsweise aufgrund einer nicht ganz runden Gleitlagerbuchse. Dadurch, dass im Bereich des Gleitlagers ein in radialer Richtung wirksames elastisches Element vorgesehen ist, können Drehmomentspitzen reduziert werden, die beim Betätigen ohne Last beim Durchfahren enger Stellen auftreten, so dass die Spitzenbelastung der einzelnen Bauteile verringert wird. Die Selbsthemmbedingung des Beschlags, das Keilsteuerverhalten und das Spielfreistellen werden dabei nicht verändert, hingegen die Verschleiß-Lebensdauer verlängert. Das elastische Element kann auch zusätzlich als Dämpfungselement wirken.

Das vorzugsweise mit einer ringförmigen Grundform versehene elastische Element ist vorzugsweise an einer Stelle angeordnet, die während der Verstellung des Beschlags ohne Relativbewegung ist, beispielsweise direkt zwischen dem Gleitlager und dem zweiten Beschlagteil oder zur Vereinfachung der Montage zwischen einer Buchse oder einem Käfig einerseits und dem Gleitlager andererseits. Eine Ausbildung aus Kunststoff hat die Vorteile einer einfachen Herstellung und einer gezielten Einstellbarkeit der Eigenschaften. Das elastische Element kann auch aus Federstahlblech ausgebildet sein und beispielsweise in Umfangsrichtung eine Wellenform aufweisen. Der Käfig oder das Federstahlblech können im Crashfall auf Block gehen, d.h. die Wirkung des elastischen Elementes aufheben.

Der erfindungsgemäße Beschlag ist vorzugsweise für einen motorischen Antrieb ausgelegt, kann jedoch auch manuell angetrieben werden. Die Erfindung ist auch bei anderen motorisch oder manuell angetriebenen Getriebebeschlägen verwendbar, unabhängig davon, ob Exzenter aus Keilen oder ein Festexzenter vorgesehen ist.

Im folgenden ist die Erfindung anhand von drei in der Zeichnung dargestellten Ausführungsbeispielen mit Abwandlungen näher erläutert. Es zeigen
- Fig. 1: eine Explosionsdarstellung des ersten Ausführungsbeispiels, wobei die Mitnehmerbuchse aus einer anderen Blickrichtung dargestellt ist,

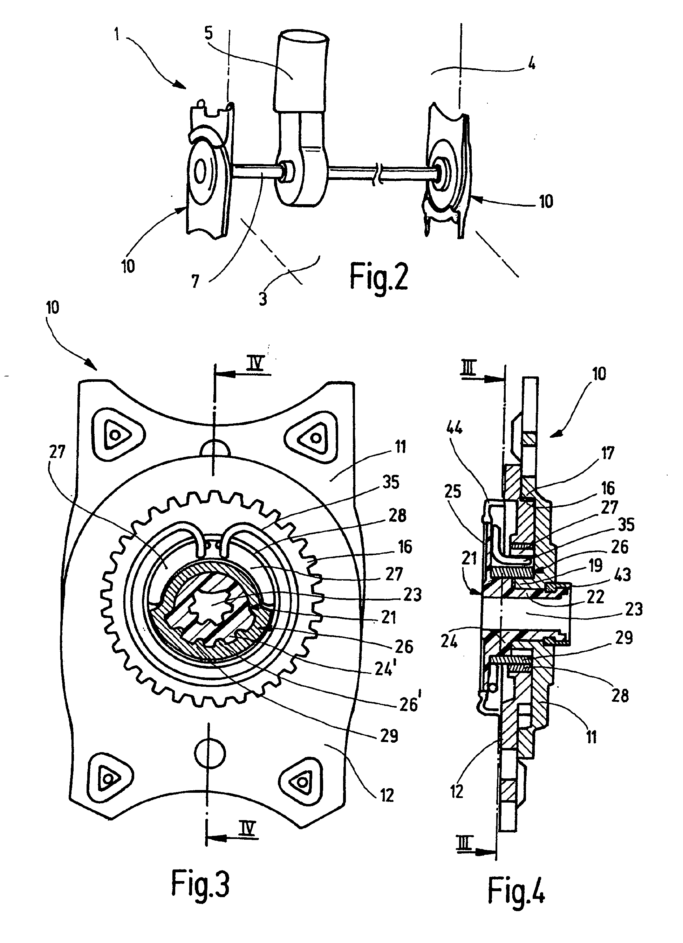

- Fig. 2: eine schematische Darstellung eines Fahrzeugssitzes mit zwei erfindungsgemäßen Beschlägen,

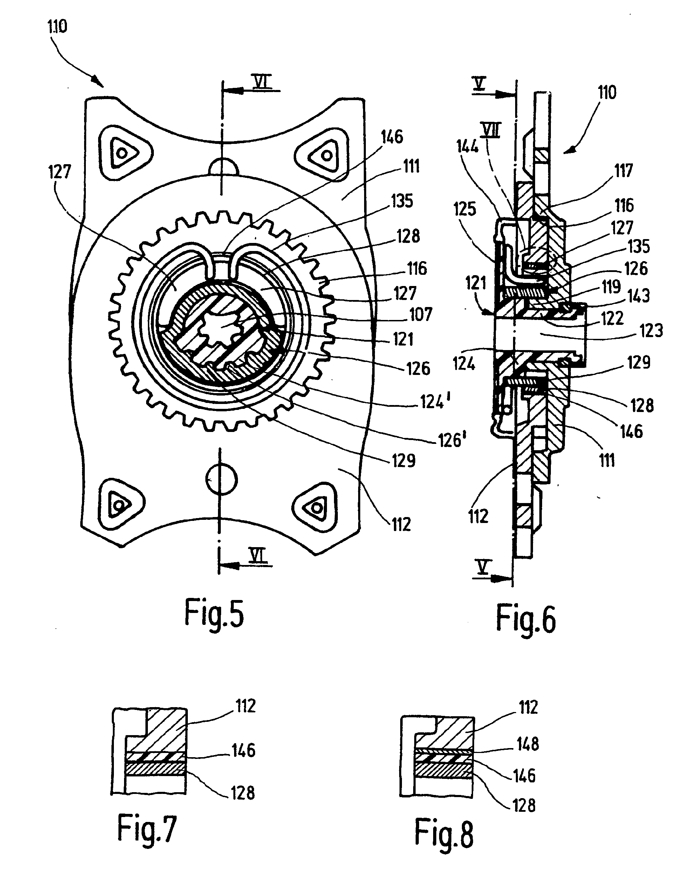

- Fig. 3: einen Radialschnitt durch das erste Ausführungsbeispiel entlang der Linie III-III in Fig. 4,
- Fig. 4: einen Axialschnitt durch das erste Ausführungsbeispiel entlang der Linie IVIV in Fig. 3,
- Fig. 5: einen Radialschnitt durch das zweite Ausführungsbeispiel entlang der Linie V-V in Fig. 6,
- Fig. 6: einen Axialschnitt durch das zweite Ausführungsbeispiel entlang der Linie VI-VI in Fig. 5,
- Fig. 7: einen Teilausschnitt des zweiten Ausführungsbeispiels im Bereich VII in Fig. 6,
- Fig. 8: einen Fig. 7 entsprechenden Teilausschnitt gemäß einer ersten Abwandlung,

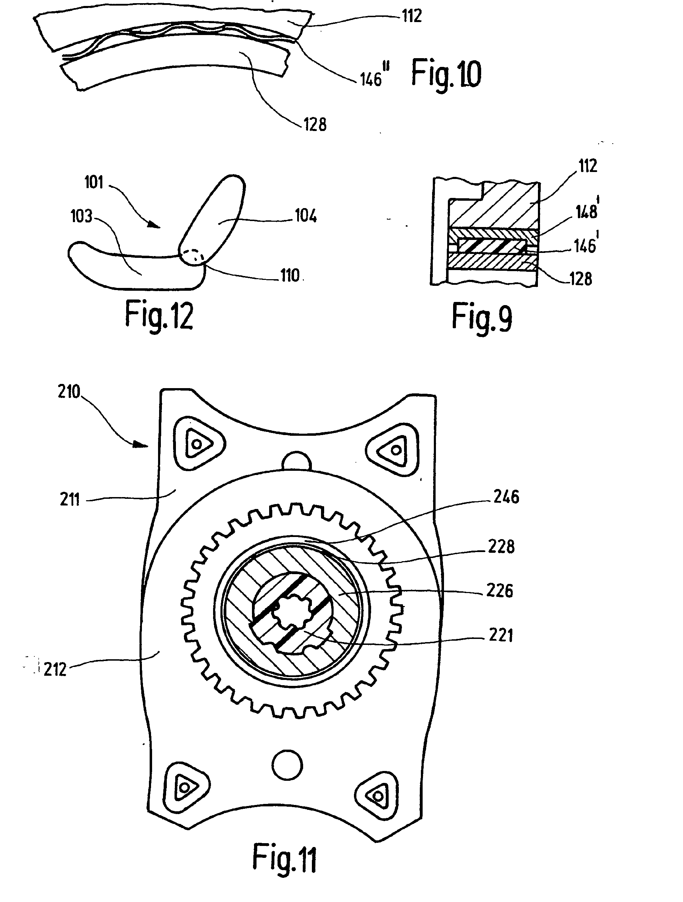

- Fig. 9: einen Fig. 7 entsprechenden Teilausschnitt gemäß einer zweiten Abwandlung,
- Fig. 10: eine Teilansicht gemäß einer dritten Abwandlung,
- Fig. 11: einen Radialschnitt durch das dritte Ausführungsbeispiel entsprechend Fig. 5, und
- Fig. 12: eine schematische Darstellung eines Fahrzeugssitzes.

Im ersten Ausführungsbeispiel weist ein in der Zeichung nur angedeuteter Fahrzeugsitz 1 für ein Kraftfahrzeug ein Sitzteil 3 und eine relativ zum Sitzteil 3 in ihrer Neigung motorisch einstellbare Lehne 4 auf. Als Antrieb für die Neigungseinstellung ist ein Elektromotor 5 vorgesehen, welcher an der Struktur der Lehne 4 angebracht ist. Der Elektromotor 5 dreht eine Antriebswelle 7, welche horizontal im Übergangsbereich zwischen Sitzteil 3 und Lehne 4 angeordnet ist. Auf beiden Seiten des Fahrzeugsitzes 1 greift die Antriebswelle 7 auf eine später beschriebene Weise drehfest in einen Beschlag 10 ein.

Der Beschlag 10 ist als Taumelbeschlag ausgebildet, bei welchem ein erstes Beschlagteil 11 und ein zweites Beschlagteil 12 über ein Getriebe zum Verstellen und Feststellen miteinander verbunden sind. Die beiden Beschlagteile 11 und 12 weisen eine im wesentlichen flache Form auf und bestehen aus Stahl. Das erste Beschlagteil 11 ist fest mit der den antreibenden Elektromotor 5 tragenden Struktur (vorliegend der Struktur der Lehne 4) verbunden, weshalb im Ausführungsbeispiel das erste Bauteil 11 lehnenfest und daher in der Zeichnung oben dargestellt ist. Entsprechend ist das zweite Beschlagteil 12 im Ausführungsbeispiel sitzteilfest und in der Zeichnung unten dargestellt. Bei eine anderen Anordnung des Elektromotors und bei manuell angetriebenen Beschlägen können die Positionen der Beschlagteile 11 und 12 ausgetauscht sein.

Zur Ausbildung des Getriebes ist am zweiten Beschlagteil 12 ein Zahnrad 16 mit einer Außenverzahnung und am ersten Beschlagteil 11 ein Zahnkranz 17 mit einer Innenverzahnung ausgeprägt, welche miteinander kämmen. Der Durchmesser des Kopfkreises der Außenverzahnung des Zahnrads 16 ist um wenigstens eine Zahnhöhe kleiner als der Durchmesser des Fußkreises der Innenverzahnung des Zahnkranzes 17. Der entsprechende Unterschied der Zähneanzahl von Zahnrad 16 und Zahnkranz 17 ermöglicht eine Abwälzbewegung des Zahnkranzes 17 am Zahnrad 16.

Das erste Beschlagteil 11 weist auf der dem Zahnrad 16 zugewandten Seite konzentrisch zur Innenverzahnung des Zahnkranzes 17 einen angeformten Kragenzug 19 auf. Im Kragenzug 19 ist mit Spiel eine Mitnehmerbuchse 21 mittels einer Nabe 22 gelagert. Die aus Kunststoff bestehende Mitnehmerbuchse 21 ist zentral mit einer zu einem Keilwellenprofil der Antriebswelle 7 passenden Bohrung 23 versehen. Im Anschluß an ihre Nabe 22 weist die Mitnehmerbuchse 21 eine Abstufung 24 mit größeren Durchmesser als die Nabe 22 und daran anschließend eine Abdeckscheibe 25 mit größerem Durchmesser als die Abstufung 24 auf.

Über einen Teil ihres Umfangs hinweg, im Ausführungsbeispiel etwas weniger als die Hälfte, weist die Abstufung 24 eine radial nach außen gerichtete Außenverzahnung 24' auf, im Ausführungsbeispiel mit fünf Zähnen. Im Bereich der Außenverzahnung 24' nimmt die Abstufung 24 einen Mitnehmerring 26 aus Stahl auf, welcher bereichsweise eine Innenverzahnung 26' aufweist, die formschlüssig und vollständig in die Außenverzahnung 24' greift. Anstelle der Verzahnungen sind auch andere formschlüssige Übertragungsprofile mit Rippen, Polygonzügen oder dergleichen möglich. Zur Spielbeseitigung in der formschlüssigen Verbindung zwischen Innenverzahnung 26' und Außenverzahnung 24' kann bei der Montage der Formschluß unter Verdrängung des Materials der Abstufung 24 erfolgen.

Auf dem Mitnehmerring 26 sind zwei Keilsegmente 27 abgestützt, die mit ihren gekrümmten Außenflächen eine in das zweite Beschlagteil 12 drehfest eingepreßte Gleitlagerbuchse 28 lagern. Der Mitnehmerring 26 weist ein zwischen die Schmalseiten der Keilsegmente 27 mit Spiel fassendes Mitnehmersegment 29 auf, welches auf seiner radial nach innen weisenden Seite die Innenverzahnung 26' trägt. Das Mitnehmersegment 29, die Abstufung 24 der Mitnehmerbuchse 21 und ein Abschnitt der Bohrung 23 samt Antriebswelle 7 liegen somit in einer Ebene, was mehrachsige Spannungszustände vermeidet. Auf der Innenseite der Abdeckscheibe 25 der Mitnehmerbuchse 21 sind zwei abstehende Zapfen 32 oder allgemein Nocken angeformt, welche stirnseitig jeweils an einem der beiden Keilsegmente 27 anliegen und dieses in axialer Richtung sichern.

Die einander zugekehrten Breitseiten der Keilsegmente 27 nehmen mit je einer durch vorspringende Materialpartien definierten Ausnehmung jeweils einen abgewinkelten Endfinger einer Ringfeder 35 auf, welche die Keilsegmente 27 in Umfangsrichtung auseinanderdrückt, wobei bei einer Blockage der Keilsegmente 27 im Betrieb oder einem Anlaufen der Lehne 4 gegen eine Last die radial äußeren, vorspringenden Materialpartien einander berühren und beaufschlagen können.

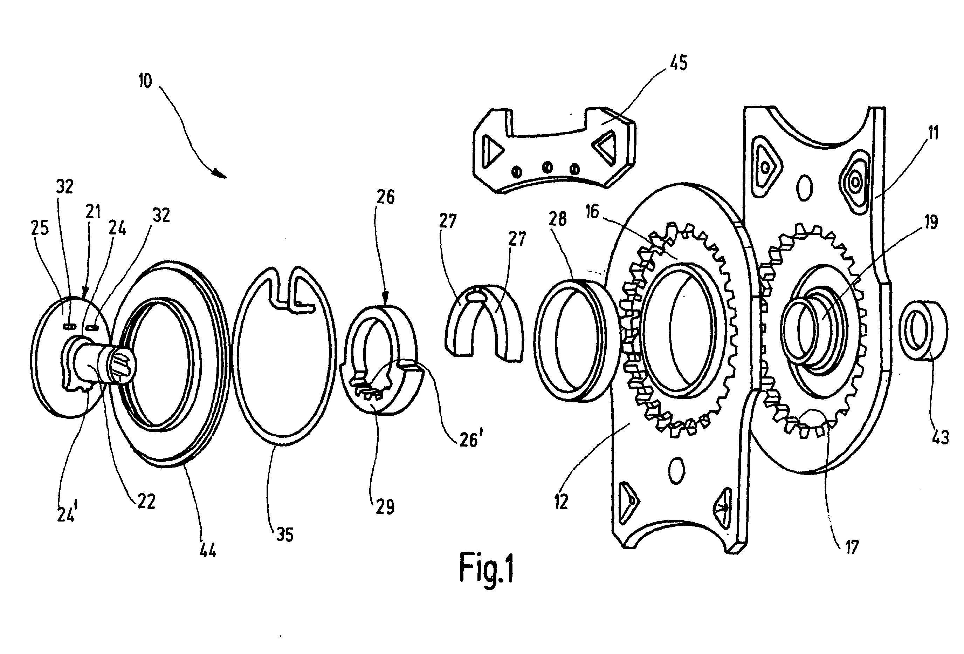

Die Mitnehmerbuchse 21 wird auf der Außenseite des ersten Beschlagteils 11 durch einen aufgeclipsten Sicherungsring 43 axial gesichert. Auf der Außenseite des zweiten Beschlagteils 12 ist zwischen der Ausprägung für das Zahnrad 16 und der Abdeckscheibe 25 der Mitnehmerbuchse 21 ein Dichtring 44 vorgesehen. Zur Aufnahme der axial wirkenden Kräfte ist an den beiden Beschlagteilen 11 und 12 je ein Halteblech 45 angeschweißt, welches das jeweils andere Beschlagteil übergreift, ohne die Einstellbewegung zu behindern. Der Übersichtlichkeit halber ist nur in Fig. 1 eines dieser Haltebleche 45 dargestellt.

Durch den Mitnehmerring 26 und die Keilsegmente 27 wird ein Exzenter definiert, welcher in Verlängerung der Richtung der Exzentrizität das Zahnrad 16 an einer so definierten Eingriffsstelle in den Zahnkranz 17 drückt. Bei einem Antrieb durch die sich drehende Antriebswelle 7 wird ein Drehmoment zunächst auf die Mitnehmerbuchse 21 und dann auf den so definierten Exzenter übertragen, welcher entlang der Gleitlagerbuchse 28 gleitet unter Verlagerung der Richtung der Exzentrizität und damit unter Verlagerung der Eingriffsstelle des Zahnrades 16 im Zahnkranz 17, was sich als taumelnde Abwälzbewegung darstellt.

Das zweite Ausführungsbeispiel gleicht weitgehend dem ersten Ausführungsbeispiel, weshalb gleiche und gleichwirkende Bauteile um 100 höhere Bezugszeichen tragen.

Ein in der Zeichung nur angedeuteter Fahrzeugsitz 101 für ein Kraftfahrzeug weist ein Sitzteil 103 und eine relativ zum Sitzteil 103 in ihrer Neigung einstellbare Lehne 104 auf. Als Antrieb für die Neigungseinstellung ist ein Elektromotor vorgesehen, welcher an der Struktur der Lehne 104 angebracht ist. Der Elektromotor dreht eine Antriebswelle 107, welche horizontal im Übergangsbereich zwischen Sitzteil 103 und Lehne 104 angeordnet ist. Auf beiden Seiten des Fahrzeugsitzes 101 greift die Antriebswelle 107 auf eine später beschriebene Weise drehfest in einen Beschlag 110 ein.

Der Beschlag 110 ist als Taumelbeschlag ausgebildet, bei welchem ein erstes Beschlagteil 111 und ein zweites Beschlagteil 112 über ein Getriebe zum Verstellen und Feststellen miteinander verbunden sind. Die beiden Beschlagteile 111 und 112 weisen eine im wesentlichen flache Form auf und bestehen aus Stahl. Das erste Beschlagteil 111 ist fest mit der den antreibenden Elektromotor tragenden Struktur, vorliegend also der Struktur der Lehne 104, verbunden, weshalb im Ausführungsbeispiel das erste Bauteil 111 lehnenfest und daher in der Zeichnung oben dargestellt ist. Entsprechend ist das zweite Beschlagteil 112 im Ausführungsbeispiel sitzteilfest und in der Zeichnung unten dargestellt. Bei einer anderen Anordnung des Elektromotors und bei manuell angetriebenen Beschlägen können die Positionen der Beschlagteile 111 und 112 ausgetauscht sein.

Zur Ausbildung des Getriebes ist am zweiten Beschlagteil 112 ein Zahnrad 116 mit einer Außenverzahnung und am ersten Beschlagteil 111 ein Zahnkranz 117 mit einer Innenverzahnung ausgeprägt, welche miteinander kämmen. Der Durchmesser des Kopfkreises der Außenverzahnung des Zahnrads 116 ist um wenigstens eine Zahnhöhe kleiner als der Durchmesser des Fußkreises der Innenverzahnung des Zahnkranzes 117. Aufgrund einer Zähneanzahldifferenz zwischen Zahnrad 116 und Zahnkranz 117 erfolgt eine Abwälzbewegung des Zahnkranzes 117 am Zahnrad 116.

Das erste Beschlagteil 111 weist auf der dem Zahnrad 116 zugewandten Seite konzentrisch zur Innenverzahnung des Zahnkranzes 117 einen angeformten Kragenzug 119 auf. Eine Mitnehmerbuchse 121 aus Kunststoff ist mit einer Nabe 122, welche innerhalb des Kragenzugs 119 angeordnet ist, und zentral mit einer zu einem Keilwellenprofil der Antriebswelle 107 passenden Bohrung 123 versehen. Im Anschluß an ihre Nabe 122 weist die Mitnehmerbuchse 121 eine Abstufung 124 mit größerem Durchmesser als die Nabe 122 und daran anschließend eine Abdeckscheibe 125 mit größerem Durchmesser als die Abstufung 124 auf.

Im Bereich ihrer Abstufung 124 wird die Mitnehmerbuchse 121 von einen auf dem Kragenzug 119 gelagerten Mitnehmerring 126 aus Stahl aufgenommen, welcher bereichsweise eine Innenverzahnung 126' aufweist, die formschlüssig und vollständig in eine entsprechende, als Überfragungsprofil wirkende Außenverzahnung 124' der Abstufung 124 greift. Wie im ersten Ausführungsbeispiel sind auch andere formschlüssige Übertragungsprofile möglich. Auch eine Materialverdrängung bei der Montage kann vorgesehen werden.

Auf dem Mitnehmerring 126 sind zwei Keilsegmente 127 abgestützt, die mit ihren gekrümmten Außenflächen eine auf später beschriebene Weise am zweiten Beschlagteil 112 angebrachte Gleitlagerbuchse 128 lagern. Der Mitnehmerring 126 weist ein zwischen die Schmalseiten der Keilsegmente 127 mit Spiel fassendes Mitnehmersegment 129 auf, welches auf seiner radial nach innen weisenden Seite die genannte Innenverzahnung trägt. Das Mitnehmersegment 129, die Abstufung 124 der Mitnehmerbuchse 121 und ein Abschnitt der Bohrung 123 samt Antriebswelle 107 liegen dabei in einer Ebene. Auf der Innenseite der Abdeckscheibe 125 der Mitnehmerbuchse 121 sind - entsprechend dem ersten Ausführungsbeispiel - zwei Nocken oder dergleichen angeformt, welche stirnseitig jeweils an einem der beiden Keilsegmente 127 anliegen und diese in axialer Richtung sichern.

Die einander zugekehrten Breitseiten der Keilsegmente 127 nehmen mit je einer durch vorspringende Materialpartien definierten Ausnehmung jeweils einen abgewinkelten Endfinger einer Ringfeder 135 auf, welche die Keilsegmente 127 in Umfangsrichtung auseinanderdrückt, wobei bei einem Anlaufen der Lehne 104 gegen eine Last die radial äußeren, vorspringenden Materialpartien einander berühren und beaufschlagen können.

Die Mitnehmerbuchse 121 wird auf der Außenseite des ersten Beschlagteils 111 durch einen aufgeclipsten Sicherungsring 143 axial gesichert. Auf der Außenseite des zweiten Beschlagteils 112 ist zwischen der Ausprägung für das Zahnrad 116 und der Abdeckscheibe 125 der Mitnehmerbuchse 121 ein Dichtring 144 vorgesehen. Zur Aufnahme der axial wirkenden Kräfte ist an den beiden Beschlagteilen 111 und 112 je ein Halteblech angeschweißt, welches das jeweils andere Beschlagteil übergreift, ohne die Einstellbewegung zu behindern.

Durch den Mitnehmerring 126 und die Keilsegmente 127 wird ein Exzenter definiert, welcher in Verlängerung der Richtung der Exzentrizität das Zahnrad 116 an einer so definierten Eingriffsstelle in den Zahnkranz 117 drückt. Bei einem Antrieb durch die sich drehende Antriebswelle 107 wird ein Drehmoment zunächst auf die Mitnehmerbuchse 121 und dann auf den so definierten Exzenter übertragen, welcher entlang der Gleitlagerbuchse 128 gleitet unter Verlagerung der Richtung der Exzentrizität und damit unter Verlagerung der Eingriffsstelle des Zahnrades 116 im Zahnkranz 117, was sich als taumelnde Abwälzbewegung darstellt.

Erfindungsgemäß ist die Gleitlagerbuchse 128 unter Zwischenlage eines ringförmigen, elastischen Elements 146 aus Kunststoff in das zweite Beschlagteil 112 gesetzt, wobei diese drei Bauteile normalerweise drehfest zueinander angeordnet bleiben. Die Gleitlagerbuchse 128 ist somit in radialer Richtung quasi federnd gelagert. Bei einer Betätigung des Beschlags 110 im unbelasteten Zustand können aufgrund einer reibungsbedingten Mitnahme der Keilsegmente 127 durch den Mitnehmerring 126 (anstelle einer Anlage der Keilsegmente 127 aneinander) an engen Stellen (Ovalitäten) Drehmomentspitzen entstehen, welche durch das elastische Element 146 reduziert werden, wobei die aufgenommene Energie je nach Wahl des Materials des elastischen Elementes 146 - wieder vollständig zurückgegeben oder auch teilweise dissipiert wird, d.h. gedämpft wird. Das elastische Element 146 kann auch zwischen die Gleitlagerbuchse 128 und das zweite Beschlagteil 112 eingespritzt sein.

In einer ersten abgewandelten Ausführungsform werden zur Vereinfachung der Montage die Gleitlagerbuchse 128 samt elastischem Element 146 innerhalb einer Buchse 148 aus Stahl vormontiert, oder das elastische Element 146 zwischen die Gleilagerbuchse 128 und die Buchse 148 eingespritzt, und dann diese Baugruppe in das zweite Beschlagteil 112 eingepreßt.

In einer zweiten abgewandelten Ausführungsform ist diese Buchse als Käfig 148' ausgebildet, zwischen dessen abgekröpften Randbereichen das elastische Element 146' eingesetzt, und auf der Gleitlagerbuchse 128 montiert wird, wobei auch hier das elastische Element 146' zwischen Gleitlagerbuchse 128 und Käfig 148' eingespritzt werden kann. Diese vormontierte Baugruppe wird wie im Falle der ersten Abwandlung in das zweite Beschlagteil 112 eingepreßt. Im Crashfall werden die Randbereiche des Käfigs 148' auf Block mit der Gleitlagerbuchse 128 gedrückt, so daß die Wirkung des elastischen Elementes 146' aufgehoben ist.

In einer dritten abgewandelten Ausführungsform besteht das elastische Element 146" aus Stahlfederblech mit einer ringförmigen Grundform und weist entlang seines Umfangs eine Wellenform auf, mit welcher die radial wirksamen Kräfte aufgenommen werden können. Im Crashfall wird dieses Stahlfederblech auch auf Block gedrückt, d.h. die Elastizität wird ebenfalls herausgenommen.

Das dritte Ausführungsbeispiel stimmt weitgehend mit dem zweiten Ausführungsbeispiel überein, weshalb gleiche und gleichwirkende Bauteile um 100 höhere Bezugszeichen tragen. Der Beschlag 210 weist anstelle des aus Mitnehmerring und Keilsegmenten zusammengesetzten Exzenters einen einstückigen Festexzenter 226 auf, welcher von der im ersten Beschlagteil 211 gelagerten Mitnehmerbuchse 221 gedreht wird und in der Gleitlagerbuchse 228 abläuft. Die Gleitlagerbuchse 228 ist wiederum durch Zwischenlage eines elastischen Elementes 246 im zweiten Beschlagteil 212 gelagert. Das Dämpfungselement 246 dient der kompletten Spielfreistellung des ohne Keil-Feder-System ausgestatteten Beschlags 210.

### Bezugszeichenliste

- 1; 101: Fahrzeugsitz
- 3; 103: Sitzteil
- 4; 104: Lehne
- 5: Elektromotor
- 7; 107: Antriebswelle
- 10; 110, 210: Beschlag
- 11; 111, 211: erstes Beschlagteil
- 12; 112, 212: zweites Beschlagteil
- 16; 116: Zahnrad
- 17; 117: Zahnkranz
- 19; 119: Kragenzug
- 21; 121, 221: Mitnehmerbuchse
- 22; 122: Nabe
- 23; 123: Bohrung
- 24; 124: Abstufung
- 24'; 124': Außenverzahnung
- 25; 125: Abdeckscheibe
- 26; 126: Mitnehmerring
- 26'; 126': Innenverzahnung
- 27; 127: Keilsegmenet
- 28; 128,228: Gleitlagerbuchse
- 29; 129: Mitnehmersegment
- 32: Zapfen
- 35; 135: Ringfeder
- 43; 143: Sicherungsring
- 44; 144: Dichtring
- 45: Halteblech
- 146, 146', 146", 246: Dämpfungselement
- 148, 148': Buchse, Käfig
- 226: Festexzenter

## Patentansprüche

1. Beschlag für einen Fahrzeugsitz, insbesondere für einen Kraftfahrzeugsitz, mit einem ersten Beschlagteil (11; 111; 211), einem mit dem ersten Beschlagteil (11; 111; 211) in Getriebeverbindung stehenden zweiten Beschlagteil (12; 112; 212), einem Mitnehmerring (26; 126; 226), welcher wenigstens teilweise einen im ersten Beschlagteil drehbar gelagerten Exzenter (27, 29; 127, 129) zum Antrieb einer Abwälzbewegung des zweiten Beschlagteils (12; 112; 212) am ersten Beschlagteil (11; 111; 211) definiert, und einer drehbar gelagerten, antreibbaren Mitnehmerbuchse (21; 121; 221), die zur drehfesten Aufnahme einer motorisch oder manuell angetriebenen Antriebswelle (7; 107) ausgelegt ist, **dadurch gekennzeichnet, dass** die Mitnehmerbuchse (21; 121) im Anschluss an eine ihrer Lagerung dienenden Nabe (22; 122) eine Abstufung (24; 124) mit größerem Durchmesser als die Nabe (22; 122) aufweist, und dass die Mitnehmerbuchse (21; 121; 221) und der Mitnehmerring (26; 126; 226) formschlüssig durch ein Übertragungsprofil (24', 26'; 124', 126') mit Verzahnungen oder Rippen oder Polygonzügen oder dergleichen miteinander verbunden sind, in dessen Bereich die Abstufung (24; 124) den Mitnehmerring (26; 125) aufnimmt.

2. Beschlag nach Anspruch 1, **dadurch gekennzeichnet, dass** das formschlüssige Übertragungsprofil (24', 26'; 124', 126') durch eine Außenverzahnung (24'; 124') der Mitnehmerbuchse (21; 121) und eine formschlüssig und vollständig in die Außenverzahnung (24'; 124') greifende, bereichsweise vorgesehene Innenverzahnung (26'; 126') des Mitnehmerrings (26; 126) gebildet wird.

3. Beschlag nach Anspruch 2, **dadurch gekennzeichnet, dass** die Außenverzahnung (24'; 124') radial nach außen gerichtet über einen Teil des Umfangs der Abstufung (24; 124) hinweg ausgebildet ist.

4. Beschlag nach einem der vorhergehenden Ansprüche, **dadurch gekennzeichnet, dass** zur Ausbildung der Getriebeverbindung am ersten Beschlagteil (11; 111; 211) ein Zahnkranz (17; 117) mit einer Innenverzahnung und am zweiten Beschlagteil (12; 112; 212) ein Zahnrad (16; 116) mit einer Außenverzahnung ausgeprägt ist, welche miteinander kämmen.

5. Beschlag nach Anspruch 4, **dadurch gekennzeichnet, dass** das erste Beschlagteil (11; 111; 211) auf der dem Zahnrad (16; 116) zugewandten Seite konzentrisch zur Innenverzahnung des Zahnkranzes (17; 117) einen angeformten Kragenzug (19; 119) aufweist, in welchem die Mitnehmerbuchse (21; 121) mittels ihrer Nabe (22; 122) mit Spiel gelagert ist.

6. Beschlag nach Anspruch 5, **dadurch gekennzeichnet, dass** die Nabe (22; 122) der Mitnehmerbuchse (21; 121) radial innerhalb des Kragenzugs (19; 119) und der Mitnehmerring (26; 126) radial außerhalb des Kragenzugs (19; 119) angeordnet ist.

7. Beschlag nach einem der vorhergehenden Ansprüche, **dadurch gekennzeichnet, dass** das formschlüssige Übertragungsprofil (24', 26'; 124', 126') einerseits und der Exzenter (27, 29; 127, 129) anderseits in der gleichen Ebene angeordnet sind.

8. Beschlag nach einem der vorhergehenden Ansprüche, **dadurch gekennzeichnet, dass** die Mitnehmerbuchse (21; 121; 221) aus Kunststoff ausgebildet ist.

9. Beschlag nach einem der vorhergehenden Ansprüche, **dadurch gekennzeichnet, dass** das Material (24; 124) des an der Mitnehmerbuchse (21; 121; 221) ausgebildeten Übertragungsprofils (24'; 124') bei der Montage verdrängbar ist.

10. Beschlag nach einem der vorhergehenden Ansprüche, **dadurch gekennzeichnet, dass** die Mitnehmerbuchse (21; 121; 221) Nocken (32) zur axialen Sicherung des Exzenters (27, 29; 127, 129) aufweist.

11. Beschlag nach einem der vorhergehenden Ansprüche, **dadurch gekennzeichnet, dass** der Exzenter (27, 29; 127, 129) aus einem Mitnehmersegment (29; 129) des Mitnehmerrings (26; 126) und zwei gegeneinander verspannten Keilsegmenten (27; 127) besteht.

12. Beschlag nach einem der vorhergehenden Ansprüche, **dadurch gekennzeichnet, dass** dem zweiten Beschlagteil (112; 212) ein Gleitlager (128; 228) zugeordnet ist, an welchem der Exzenter (126; 127; 226) abläuft, und dass im Bereich des Gleitlagers (128; 228) ein in radialer Richtung wirksames, ringförmiges elastisches Element (146; 146'; 246) vorgesehen ist, welches zwischen dem Gleitlager (128; 228) und dem zweiten Beschlagteil (112; 212) angeordnet ist, wobei diese drei Bauteile normalerweise drehfest zueinander angeordnet bleiben.

13. Beschlag nach Anspruch 12, **dadurch gekennzeichnet, dass** das elastische Element (146; 146') zwischen dem Gleitlager (128) und einer Buchse (148; 148') vormontiert ist.

14. Beschlag nach Anspruch 12 oder 13, **dadurch gekennzeichnet, dass** das elastische Element (146') in einem Käfig (148') vormontiert ist, wobei das Gleitlager (128) und der Käfig (148') im Crashfall auf Block gedrückt werden.

15. Beschlag nach einem der Ansprüche 12 bis 14, **dadurch gekennzeichnet, dass** das elastische Element (146; 146') aus Kunststoff ausgebildet ist.

16. Beschlag nach Anspruch 12 oder 13, **dadurch gekennzeichnet, dass** das elastische Element (146") aus Federstahlblech ausgebildet ist und in Umfangsrichtung eine Wellenform aufweist.

17. Beschlag nach einem der Ansprüche 12 bis 16, **dadurch gekennzeichnet, dass** ein Festexzenter (226) über das Gleitlager (228) auf das elastische Element (246) einwirkt.

18. Beschlag nach einem der Ansprüche 12 bis 17, **dadurch gekennzeichnet, dass** das elastische Element (146; 146'; 146"; 246) auch als Dämpfungselement ausgebildet ist.

19. Fahrzeugsitz, insbesondere Kraftfahrzeugsitz, **gekennzeichnet durch** wenigstens einen Beschlag (10; 110; 210) nach einem der vorhergehenden Ansprüche.

20. Fahrzeugsitz nach Anspruch 19, **gekennzeichnet durch** einen Elektromotor (5), eine Antriebswelle (7; 107) und je einen Beschlag (10; 110) auf den beiden Seiten der Antriebswelle (7; 107).

## Claims

1. Fitting for a vehicle seat, especially for a motor vehicle seat, having a first fitting part (11; 111; 211), a second fitting part (12; 112; 212) connected by a gear mechanism to the first fitting part (11; 111; 211), a driving ring (26; 126; 226) that at least partially defines an eccentric (27, 29; 127, 129) rotatably mounted in the first fitting part for driving a rolling movement of the second fitting part (12; 112; 212), and a rotatably mounted, drivable driving bushing designed for receiving without relative rotation a motor-driven or manually driven drive shaft (7, 107), **characterised in that** adjoining a hub (22; 122) serving as its bearing, the driving bushing (21; 121) has a step (24; 124) of a larger diameter than the hub (22; 122) and **in that** the driving bushing (21; 121; 221) and the driving ring (26; 126; 226) are connected to one another with a positive fit by means of a transmission profile (24', 26'; 124', 126') having toothings or ribs or polygonal members or the like, in the region of which the step (24; 124) receives the driving ring (26; 126).

2. Fitting according to claim 1, **characterised in that** the interlocking transmission profile (24', 26'; 124', 126') is formed by an external toothing (24'; 124') of the driving bushing (21; 121) and an internal toothing (26'; 126') of the driving ring (26; 126), the internal toothing being provided in regions and engaging with a positive fit and completely in the external toothing (24'; 124').

3. Fitting according to claim 2, **characterised in that** the external toothing (24'; 124') is designed so that it is radially outwardly directed over part of the circumference of the step (24; 124).

4. Fitting according to any one of the preceding claims, **characterised in that** to form the gear connection, a toothed ring (17; 117) having an internal toothing is formed on the first fitting part (11; 111; 211) and a gearwheel (16; 116) having an external toothing is formed on the second fitting part (12; 112; 212), the toothings meshing with one another.

5. Fitting according to claim 4, **characterised in that** on its side facing the gearwheel (16; 116) and concentric with the internal toothing of the toothed ring (17; 117) the first fitting part (11; 111; 211) has an integrally formed drawn collar (19; 119), in which the driving bushing (21; 121) is mounted with clearance by means of its hub (22; 122).

6. Fitting according to claim 5, **characterised in that** the hub (22; 122) of the driving bushing (21; 121) is arranged radially within the drawn collar (19; 119) and the driving ring (26; 126) is arranged radially outside the drawn collar (19; 119).

7. Fitting according to any one of the preceding claims, **characterised in that** the positively locking transmission profile (24', 26'; 124'; 126') on the one hand and the eccentric (27, 29; 127; 129) on the other hand are arranged in the same plane.

8. Fitting according to any one of the preceding claims, **characterised in that** the driving bushing (21; 121; 221) is formed from plastics material.

9. Fitting according to any one of the preceding claims, **characterised in that** the material (24; 124) of the transmission profile (24'; 124') formed on the driving bushing (21; 121; 221) is displaceable during assembly.

10. Fitting according to any one of the preceding claims, **characterised in that** the driving bushing (21; 121; 221) has cams (32) for axially securing the eccentric (27, 29; 127, 129).

11. Fitting according to any one of the preceding claims, **characterised in that** the eccentric (27, 29, 127, 129) comprises a driving segment (29; 129) of the driving ring (26; 126) and two clamped-together wedge segments (27, 127).

12. Fitting according to any one of the preceding claims, **characterised in that** a sliding bearing (128; 228) on which the eccentric (126; 127; 226) rolls is associated with the second fitting part (112; 212), and **in that** an annular resilient element (146; 146'; 246) effective in the radial direction is provided in the region of the sliding bearing (128; 228) and is arranged between the sliding bearing (128; 228) and the second fitting part (112; 212), these three components normally remaining secured against rotation with respect to one another.

13. Fitting according to claim 12, **characterised in that** the resilient element (146; 146') is pre-assembled between the sliding bearing (128) and a bushing (148; 148').

14. Fitting according to claim 12 or 13, **characterised in that** the resilient element (146') is pre-assembled in a cage (148'), the sliding bearing (128) and the cage (148') being compressed to a block in the event of a crash.

15. Fitting according to any one of claims 12 to 14, **characterised in that** the resilient element (146; 146') is formed from plastics material.

16. Fitting according to claim 12 or 13, **characterised in that** the resilient element (146") is formed from spring steel sheet and has a corrugated shape in the circumferential direction.

17. Fitting according to any one of claims 12 to 16, **characterised in that** a fixed eccentric (226) acts via the sliding bearing (228) on the resilient element (246).

18. Fitting according to any one of claims 12 to 17, **characterised in that** the resilient element (146; 146'; 146"; 246) is also in the form of a damping element.

19. Vehicle seat, especially a motor vehicle seat, **characterised by** at least one fitting (10; 110; 210) according to any one of the preceding claims.

20. Vehicle seat according to claim 19, **characterised by** an electric motor (5), a drive shaft (7; 107) and a respective fitting (10; 110) on both sides of the drive shaft (7; 107).

## Revendications

1. - Armature pour un siège de véhicule, en particulier pour un siège de véhicule automobile, avec une première partie d'armature (11 ; 111 ; 211), une deuxième partie d'armature (12, 112 ; 212) reliée de manière active avec la première partie d'armature (11 ; 111 ; 211), une bague d'entraînement (26 ; 126 ; 226), laquelle définit au moins partiellement un excentrique (27 ; 29 ; 127 ; 129) monté rotatif dans la première partie d'armature pour la commande d'un mouvement de roulement de la deuxième partie d'armature (12 ; 112 ; 212) sur la première partie d'armature (11 ; 111 ; 211), et une douille d'entraînement (21 ; 121 ; 221) pouvant être entraînée, montée rotative, qui est étudiée pour la réception résistante à la torsion d'un arbre de commande (7 ; 107) actionné par moteur ou manuellement, **caractérisé par le fait que** la douille d'entraînement (21 ; 121) présente à la suite d'un moyeu (22 ; 122) servant à son montage un gradin (24 ; 124) avec un diamètre supérieur au moyeu (22, 122) et **par le fait que** la douille d'entraînement (21 ; 121 ; 221) et la bague d'entraînement (26 ; 126 ; 226) sont reliées l'une à l'autre à engagement positif par un profilé de transmission (24',26' ; 124', 126') avec des dentures ou des nervures ou des tracés en polygones ou similaires, zone dans laquelle le gradin (24 ; 124) reçoit la bague d'entraînement (26 ; 126).

2. - Armature selon la revendication 1, **caractérisée par le fait que** le profilé de transmission (24',26' ; 124',126') à engagement positif est formé par une denture extérieure (24' ; 124') de la douille d'entraînement (21 ; 121) et une denture intérieure (26' ; 126') de la bague d'entraînement (26 ; 126) prévue par zones, s'engrenant à engagement positif et complètement dans la denture extérieure (24' ; 124').

3. - Armature selon la revendication 2, **caractérisée par le fait que** la denture extérieure (24' ; 124') est dirigée radialement vers l'extérieur sur une partie de la périphérie du gradin (24 ; 124).

4. - Armature selon l'une des revendications précédentes, **caractérisée par le fait que**, pour la formation de la liaison active sur la première partie d'armature (11 ; 111 ; 211) est formée par matriçage une couronne dentée (17 ; 117) avec une denture intérieure et, sur la deuxième partie d'armature (12 ; 112 ; 212), une roue dentée (16, 116) avec une denture extérieure, lesquelles s'engrènent l'une dans l'autre.

5. - Armature selon la revendication 4, **caractérisée par le fait que** la première partie d'armature (11 ; 111 ; 211) présente sur le côté tourné vers la roue dentée (16 ; 116) concentriquement à la denture intérieure de la couronne dentée (17 ; 117) un passage de collerette (19 ; 119) façonné, dans lequel la douille d'entraînement (21 ; 121) est montée avec jeu au moyen de son moyeu (22 ; 122).

6. - Armature selon la revendication 5, **caractérisée par le fait que** le moyeu (22 ; 122) de la douille d'entraînement (21 ; 121) est disposé radialement à l'intérieur du passage de collerette (19 ; 119) et la bague d'entraînement (26 ; 126) est disposée radialement à l'extérieur du passage de collerette (19 ; 119).

7. - Armature selon l'une des revendications précédentes, **caractérisée par le fait que** le profilé de transmission (24',26' ; 124',126') à engagement positif d'une part et l'excentrique (27, 29, 127, 129) d'autre part sont disposés dans le même plan.

8. - Armature selon l'une des revendications précédentes, **caractérisée par le fait que** la douille d'entraînement (21 ; 121 ; 221) est réalisée en matière plastique.

9. - Armature selon l'une des revendications précédentes, **caractérisée par le fait que** la matière (24 ; 124) du profilé de transmission (24', 124) réalisé sur la douille d'entraînement (21 ; 121 ; 221) est apte à être refoulée lors du montage.

10. - Armature selon l'une des revendications précédentes, **caractérisée par le fait que** la douille d'entraînement (21 ; 121 ; 221) présente des saillies (32) pour la fixation axiale de l'excentrique (27, 29 ; 127, 129).

11. - Armature selon l'une des revendications précédentes, **caractérisée par** le fait l'excentrique (27, 29 ; 127, 129) se compose d'un segment d'entraînement (29 ; 129) de la bague d'entraînement (26 ; 126) et deux segments de calage (27 ; 127) tendus l'un contre l'autre.

12. - Armature selon l'une des revendications précédentes, **caractérisée par le fait qu'**à la deuxième partie d'armature (112 ; 212) est adjoint un palier à glissement (128 ; 228), sur lequel se déroule l'excentrique (126 ; 127 ; 226), et **par le fait que**, dans la zone du palier à glissement (128 ; 228) est prévu un élément élastique (146, 146' ; 246) en forme de bague, agissant en direction radiale, lequel est disposé entre le palier à glissement (128 ; 228) et la deuxième partie d'armature (112 ; 212), à l'occasion de quoi ces trois constituants restent disposés normalement résistants à la torsion l'un par rapport à l'autre.

13. - Armature selon la revendication 12, **caractérisée par le fait que** l'élément élastique (146 ; 146') est prémonté entre le palier à glissement (128) et une douille (148 ; 148').

14. - Armature selon l'une des revendications 12 ou 13, **caractérisée par le fait que** l'élément élastique (146') est prémonté dans une cage (148'), à l'occasion de quoi le palier à glissement (128) et la cage (148') sont serrés à bloc en cas de collision.

15. - Armature selon l'une des revendications 12 à 14, **caractérisée par le fait que** l'élément élastique (146 ; 146') est réalisé en matière plastique.

16. - Armature selon l'une des revendications 12 ou 13, **caractérisée par le fait que** l'élément élastique (146") est réalisé à partir d'une tôle d'acier à ressorts et présente une forme ondulée dans la direction périphérique.

17. - Armature selon l'une des revendications 12 à 16, **caractérisée par le fait qu'**un excentrique fixe (226) sur le palier à glissement (228) agit sur l'élément élastique (246).

18. - Armature selon l'une des revendications 12 à 17, **caractérisée par le fait que** l'élément élastique (146, 146' ; 146" ; 246) est réalisé également comme élément d'amortissement.

19. - Siège de véhicule, en particulier siège de véhicule automobile, **caractérisé par** au moins une armature (10 ; 110 ; 210) telle que définie à l'une des revendications précédentes.

20. - Siège de véhicule selon la revendication 19, **caractérisé par** un moteur électrique (5), un arbre de commande (7 ; 107) et une armature (10, 110) sur chacun des deux côtés de l'arbre de commande (7 ; 107).
